# EUROPÄISCHE PATENTSCHRIFT

(11) **EP 1 963 686 B1**
(45) Veröffentlichungstag und Bekanntmachung des Hinweises auf die Patenterteilung: **26.10.2011**
(21) Anmeldenummer: 06829744.9
(22) Anmeldetag: 19.12.2006
(51) Int. Cl.: F15B 21/14, F15B 1/02, B60T 1/10, B60K 6/12, F16H 61/40

(54) **HYDROSTATISCHER ANTRIEB**
HYDROSTATIC DRIVE
MÉCANISME D ENTRAÎNEMENT HYDROSTATIQUE

(30) Priorität: 23.12.2005 DE 102005061991
(43) Veröffentlichungstag der Anmeldung: 03.09.2008
(73) Patentinhaber: Bosch Rexroth AG, 70184 Stuttgart (DE)
(72) Erfinder: MÜLLER, Matthias, 86356 Neusäss (DE); MUTSCHLER, Steffen, 89073 Ulm (DE)
(74) Vertreter: Körfer, Thomas
(86) Internationale Anmeldenummer: PCT/EP2006/012260
(87) Internationale Veröffentlichungsnummer: WO 2007/079935

(56) Entgegenhaltungen:
- EP-A2- 1 433 648
- AT-B- 395 960
- DE-A1- 2 949 337

## Beschreibung

Die Erfindung betrifft einen hydrostatischen Antrieb mit Rückgewinnung von gespeicherter Energie.

Hydrostatische Antriebe werden häufig zum Antreiben von Nutzfahrzeugen verwendet. Dabei ist es möglich, über den hydrostatischen Antrieb einen Teil der kinetischen Energie während des Bremsvorgangs zu speichern und anschließend zurückzugewinnen. In der AT 395 960 B ist es vorgeschlagen, einen hydrostatischen Antrieb in einem geschlossenen Kreislauf mit einer zur Förderung in lediglich einer Richtung vorgesehenen Hydropumpe zu verwenden. Die förderseitige Arbeitsleitung, welche die Hydropumpe mit dem Hydromotor verbindet, ist mit einem Hochdruckspeicher verbunden. Es ist ein zweiter Speicher vorhanden, der als Niederdruckspeicher ausgebildet und mit der bezüglich der Hydropumpe saugseitigen Arbeitsleitung verbunden ist. Der Hochdruckspeicher sowie der Niederdruckspeicher sind permanent mit der förderseitigen bzw. der saugseitigen Arbeitsleitung verbunden. Während eines normalen Fahrbetriebs fördert die Hydropumpe in die förderseitige Arbeitsleitung. Der Hydromotor ist verstellbar und zum Fahren in einer ersten Richtung ausgeschwenkt. Gerät das Fahrzeug in einen Schiebebetrieb, so wird zunächst das Schluckvolumen des Hydromotors in Richtung Null verstellt. Um eine Bremswirkung zu erzielen, wird anschließend der Hydromotor in der entgegengesetzten Richtung ausgeschwenkt. In Folge dessen fördert der Hydromotor in die bezüglich der Hydropumpe förderseitige Arbeitsleitung.

Um das Einströmen von Druckmittel in die Hydropumpe entgegen der Förderrichtung der Hydropumpe zu verhindern, ist in der Arbeitsleitung ein Rückschlagventil vorgesehen. Das von dem Hydromotor geförderte Druckmittel wird dementsprechend in den Hochdruckspeicher gefördert. Damit wird unter Druckerhöhung des Drucks in dem Hochdruckspeicher die kinetische Energie des Fahrzeugs in Druckenergie umgewandelt. Der Volumenstromausgleich erfolgt durch Entnahme von Druckmittel aus dem Niederdruckspeicher.

Soll die gespeicherte Energie zurückgewonnen werden, so wird aus dem Hochdruckspeicher Druckmittel entnommen. Der Hydromotor ist wie im vorangegangenen Fahrbetrieb nun wieder in seiner ersten Richtung ausgeschwenkt. Beim Entspannen des Druckmittels über den Hydromotor wird durch den Hydromotor ein Abtriebsmoment erzeugt. Das durch den Hydromotor hindurch geförderte Druckmittel wird zum Volumenausgleich in den Niederdruckspeicher gefördert.

Bei dem bekannten Antrieb ist es nachteilig, dass zur Entnahme des Druckmittels der Hydromotor direkt aus dem Hochdruckspeicher mit dem Druckmittel beaufschlagt wird. Bei dem vorgeschlagenen Antrieb mit Rückgewinnung der kinetischen Energie muss zudem der Hydromotor über seine Neutrallage hinaus vergeschwenkt werden. Dabei wird die Strömungsrichtung in dem hydraulischen Kreislauf teilweise umgekehrt. Durch das direkte Zuführen des Druckmittels zu dem Hydromotor ist eine Momentenaddition durch Nutzung des Drucks in dem Hochdruckspeicher sowie dem Drehmoment eines die Hydropumpe antreibenden Motors nicht möglich.

Die Aufgabe der Erfindung besteht darin, einen hydrostatischen Antrieb zu schaffen, mit dem eine Weiterführung eines hydrostatischen Bremsvorgangs, welcher zu einer vollständigen Füllung eines für den Bremsvorgang und zur Speicherung von dabei frei werdender Bremsenergie verwendeten Druckspeichers führt, auf einfache Weise und ohne Volumenausgleich ermöglicht ist.

Die Aufgabe wird durch den erfindungsgemäßen hydrostatischen Antrieb mit den Merkmalen des Anspruchs 1 gelöst.

Der erfindungsgemäße hydrostatische Antrieb umfasst eine Hydropumpe, die über eine erste Arbeitsleitung mit einem ersten Arbeitsleitungsanschluss und über eine zweite Arbeitsleitung mit einem zweiten Arbeitsleitungsanschluss eines Hydromotors verbindbar ist. Ferner umfasst der hydrostatische Antrieb einen ersten Speicher zum Speichern von Druckenergie und einen zweiten Speicher. Zur Rückgewinnung von in dem ersten Speicher gespeicherter Druckenergie ist der erste Speicher für zumindest eine Förderrichtung der Hydropumpe mit der bei dieser Förderrichtung saugseitigen ersten bzw. zweiten Arbeitsleitung verbindbar. Der erfindungsgemäße hydrostatische Antrieb hat den Vorteil, dass das Zuführen des Druckmittels aus dem ersten Speicher, in dem das Druckmittel mit einem hohen Druck gespeichert ist, über die saugseitig mit der Hydropumpe verbundene Arbeitsleitung erfolgt. Damit ist eine Momentenaddition möglich, da zusätzlich zu der Erhöhung des saugseitigen Drucks der Hydropumpe die Hydropumpe mit einem Antriebsmoment eines die Hydropumpe antreibenden Antriebsmotors beaufschlagt werden kann. Die Rückführung der in Form von Druckenergie gespeicherten kinetischen Energie des Fahrzeugs erfolgt somit nicht direkt am Hydromotor, sondern indirekt. Der Hydromotor selbst wird dagegen wie es im normalen Fahrbetrieb ebenfalls üblich ist, lediglich durch den von der Hydropumpe erzeugten Arbeitsleitungsdruck beaufschlagt.

Der erste Speicher und der zweite Speicher sind über ein Speicherdruckbegrenzungsventil direkt miteinander verbindbar. Sofern der Hochdruckspeicher bereits vollständig gefüllt ist, kann dennoch eine hydraulische Bremsung durchgeführt werden. In diesem Fall öffnet das Speicherdruckbegrenzungsventil und das durch den Hydromotor geförderte Druckmittel wird über das Speicherdruckbegrenzungsventil in Richtung auf den zweiten Speicher zu entspannt. Es entsteht damit ein geschlossener hydraulischer Kreislauf, so dass kein Volumenausgleich erforderlich ist.

Vorteilhafte Weiterbildungen der Erfindung sind in den Unteransprüchen ausgeführt.

Beispielsweise ist es vorteilhaft, zur Rückgewinnung der in dem ersten Speicher gespeicherten Druckenergie einen Volumenstromausgleich zu ermöglichen, indem der jeweils stromabwärtige Arbeitsleitungsanschluss des Hydromotors mit dem zweiten Speicher verbindbar ist. Durch die Verbindung des stromabwärtigen Anschlusses der Hydropumpe mit dem zweiten Speicher entsteht eine hydraulische Wiege, bei der aus dem ersten Speicher Druckmittel entnommen und über die Hydropumpe und den Hydromotor, die in dieser Konfiguration seriell zueinander angeordnet sind, in den Niederdruckspeicher gefördert wird.

Weiterhin ist es vorteilhaft, zum Aufladen des ersten Speichers während eines Bremsvorgangs den für zumindest eine Strömungsrichtung stromabwärtigen ersten oder zweiten Arbeitsleitungsanschluss des Hydromotors mit dem ersten Speicher verbinden zu können. Durch eine solche Möglichkeit, den ersten Speicher mit dem stromabwärtigen Anschluss des Hydromotors verbinden zu können, ist es möglich, ohne Umkehr der Strömungsrichtung in dem hydraulischen Kreislauf das Befüllen des ersten Speichers zu ermöglichen. Zum Herstellen der Verbindungen zwischen den Arbeitsleitungsanschlüssen sowie der ersten und zweiten Arbeitsleitung bzw. dem ersten und zweiten Speicher mit der ersten Arbeitsleitung bzw. der zweiten Arbeitsleitung bzw. dem ersten Arbeitsleitungsanschluss oder zweiten Arbeitsleitungsanschluss werden vorteilhaft Sitzventile verwendet. Gemäß einer weiteren bevorzugten Ausführungsform werden die Sitzventile durch Pilotventile mit einem Steuerdruck beaufschlagt.

Weiterhin ist vorzugsweise der zweite Speicher mit einer Druckhalteleitung verbunden. Die Druckhalteleitung ist mit einer Druckmittelquelle verbindbar. Durch die Möglichkeit, eine Druckmittelquelle über die Druckhalteleitung mit dem zweiten Speicher zu verbinden, kann ein Mindestdruck in dem zweiten Speicher stets sichergestellt werden. Dies ist insbesondere vorteilhaft, um aus der Druckmittelquelle etwa durch Leckage verlorenes Druckmittel wieder nachführen zu können.

Besonders bevorzugt ist es, dass die Druckmittelquelle eine Speiseeinrichtung ist. Die Nutzung der Speiseeinrichtung als Druckmittelquelle für den zweiten Speicher erlaubt es, die Speiseeinrichtung sowohl zum Befüllen des hydraulischen Kreislaufs mit der ersten und zweiten Arbeitsleitung als auch zum Aufrechterhalten eines Mindestdrucks in dem zweiten Speicher zu nutzen. Die Speiseeinrichtung umfasst dabei vorzugsweise eine in eine Speiseleitung fördernde Speisepumpe. Besonders bevorzugt ist es, wenn die Speiseleitung über ein Schaltventil mit der Druckhalteleitung verbindbar ist. Damit lässt sich bei Abfallen des Drucks in dem zweiten Speicher durch Betätigen des Schaltventils Druckmittel aus der Speiseleitung über die Druckhalteleitung dem zweiten Speicher zuführen. Ist ein ausreichender Druck in dem zweiten Speicher vorhanden, so kann in einfacher Weise durch das Schaltventil die Verbindung zwischen der Speiseleitung und der Druckhalteleitung unterbrochen werden.

Weiterhin ist es vorteilhaft, die Speiseleitung über ein Rückschlagventil mit der Druckhalteleitung direkt zu verbinden. Dabei öffnet das Ventil in Richtung auf die Druckhalteleitung hin. Somit kann der in dem zweiten Speicher gebildete Druck nicht in das Speisesystem entweichen. Durch das Speisesystem wird dann lediglich die Leckage ausgeglichen. Ansonsten ist bei ausreichendem Druck in dem hydraulischen System der hydraulische Kreislauf von dem Speisesystem entkoppelt.

Gemäß einer weiteren bevorzugten Ausführungsform sind der erste Speicher und der zweite Speicher über ein Speicherdruckbegrenzungsventil direkt miteinander verbindbar. Sofern der Hochdruckspeicher bereits vollständig gefüllt ist, kann dennoch eine hydraulische Bremsung durchgeführt werden. In diesem Fall öffnet das Speicherdruckbegrenzungsventil und das durch den Hydromotor geförderte Druckmittel wird über das Speicherdruckbegrenzungsventil in Richtung auf den zweiten Speicher zu entspannt. Es entsteht damit ein geschlossener hydraulischer Kreislauf, so dass kein Volumenausgleich erforderlich ist.

Ausführungsbeispiele eines hydrostatischen Antriebs sind in der Zeichnung dargestellt und werden in der nachfolgenden Beschreibung näher erläutert. Es zeigen:
- Fig. 1: eine schematische Darstellung eines ersten Ausführungsbeispiels eines hydrostatischen Antriebs;
- Fig. 2: eine schematische Darstellung eines zweiten Ausführungsbeispiels eines hydrostatischen Antriebs; und
- Fig. 3: eine schematische Darstellung eines erfindungsgemäßen dritten Ausführungsbeispiels eines hydrostatischen Antriebs.

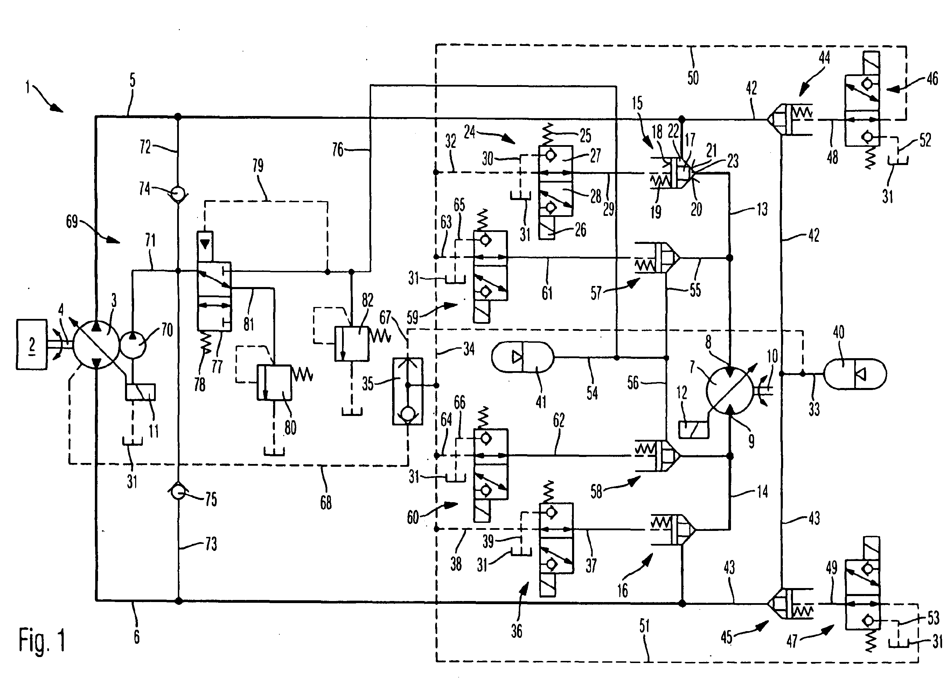

Die Fig. 1 zeigt eine schematische Darstellung eines hydrostatischen Antriebs 1. Der hydrostatische Antrieb 1 kann beispielsweise ein Fahrantrieb eines Nutzfahrzeugs sein. Der hydrostatische Antriebe 1 ist jedoch nicht auf Fahrantriebe beschränkt. Vielmehr sind sämtliche Antriebe in einer Ausführung realisierbar, bei denen ein hydrostatisches Getriebe zum Einsatz kommt.

Der hydrostatische Antrieb 1 umfasst einen Antriebsmotor 2. Der Antriebsmotor 2 treibt eine Hydropumpe 3 über eine Antriebswelle 4 an. Die Hydropumpe 3 ist eine verstellbare hydrostatische Kolbenmaschine, welche zur Förderung in zwei Richtungen ausgelegt ist. Die Hydropumpe 3 fördert abhängig von der eingestellten Förderrichtung in eine erste Arbeitsleitung 5 oder eine zweite Arbeitsleitung 6. Mit der ersten Arbeitsleitung 5 und der zweiten Arbeitsleitung 6 ist ein Hydromotor 7 verbindbar. Der Hydromotor 7 weist einen ersten Arbeitsleitungsanschluss 8 und einen zweiten Arbeitsleitungsanschluss 9 auf. Der erste Arbeitsleitungsanschluss 8 ist mit der ersten Arbeitsleitung 5 verbindbar. Dementsprechend ist der zweite Arbeitsleitungsanschluss 9 mit der zweiten Arbeitsleitung 6 verbindbar. Sind der erste

Arbeitsleitungsanschluss 8, wie es nachfolgend noch beschrieben wird, und der zweite Arbeitsleitungsanschluss 9 mit der ersten Arbeitsleitung 5 bzw. der zweiten Arbeitsleitung 6 verbunden, so sind die Hydropumpe 3 sowie der Hydromotor 7 in einem geschlossenen hydraulischen Kreislauf miteinander verbunden. Das bei Beaufschlagen des Hydromotors 7 durch den Hydromotor 7 erzeugte Abtriebsmoment wird durch eine Abtriebswelle 10 beispielsweise an eine Fahrzeugachse oder ein nachgeschaltetes Schaltgetriebe weitergeleitet.

Zur Einstellung des Fördervolumens der Hydropumpe 3 ist eine erste Verstellvorrichtung 11 vorgesehen. Dementsprechend wird das Schluckvolumen des Hydromotors 7 durch eine zweite Verstellvorrichtung 12 verstellt. Die erste Verstellvorrichtung 11 und die zweite Verstellvorrichtung 12 wirken auf jeweils einen Verstellmechanismus der Hydropumpe 3 bzw. des Hydromotors 7.

An dem ersten Arbeitsleitungsanschluss 8 des Hydromotors 7 ist eine erste Verbindungsleitung 13 angeschlossen. Der zweite Arbeitsleitungsanschluss 9 des Hydromotors 7 ist mit einer zweiten Verbindungsleitung 14 verbunden. Die erste Verbindungsleitung 13 ist über ein erstes Sitzventil 15 mit der ersten Arbeitsleitung 5 verbindbar. Die zweite Verbindungsleitung 14 ist über ein zweites Sitzventil 16 mit der zweiten Arbeitsleitung 6 verbindbar.

Sämtliche Sitzventile in dem in der Fig. 1 dargestellten hydrostatischen Kreislauf sind gleich aufgebaut. Der Übersichtlichkeit halber wird nachfolgend lediglich auf den Aufbau des ersten Sitzventils 15 im Detail eingegangen.

Das erste Sitzventil 15 weist einen Kolben 17 auf. Der Kolben 17 hat eine mit einem Druck beaufschlagbare Steuerfläche 18. Ebenfalls auf die Steuerfläche 18 wirkt die Kraft einer Schließfeder 19. Auf die Steuerfläche 18 wirken somit eine hydraulische Kraft durch einen Steuerdruck sowie die Kraft der Schließfeder 19 und beaufschlagen das erste Sitzventil 15 in Schließrichtung. An dem Kolben 17 ist eine Dichtkante 20 ausgebildet, welche dichtend mit einem Dichtsitz 21 zusammenwirkt. In dem ersten Sitzventil 15 werden bei geschlossenem Sitzventil 15 eine erste Kammer 22 und eine zweite Kammer 23 voneinander getrennt. In der ersten Kammer 22 und der zweiten Kammer 23 wirken der Druck der ersten Arbeitsleitung 5 bzw. der Druck der ersten Verbindungsleitung 13. Die in der ersten Kammer 22 und der zweiten Kammer 23 herrschenden Drücke beaufschlagen den Kolben 17 mit einer hydraulischen Kraft, welche in Öffnungsrichtung des ersten Sitzventils 15 wirkt. Wird die hydraulische Kraft auf die Steuerfläche 18 reduziert, so übersteigt die hydraulische Kraft in der ersten Kammer 22 und der zweiten Kammer 23 die Kraft der in Schließrichtung wirkenden Schließfeder 19 und das erste Sitzventil 15 wird in seine geöffnete Position gebracht. In der geöffneten Position des ersten Sitzventils 15 sind die erste Kammer 22 und die zweite Kammer 23 miteinander verbunden, so dass eine durchströmbare Verbindung zwischen der ersten Arbeitsleitung 5 und der ersten Verbindungsleitung 13 hergestellt ist. Bei geöffnetem ersten Sitzventil 15 wird somit bei einer Förderung von Druckmittel durch die Hydropumpe 3 in die erste Arbeitsleitung 5 der erste Arbeitsleitungsanschluss 8 des Hydromotors 7 mit Druckmittel beaufschlagt.

Um den auf die Steuerfläche 18 des ersten Sitzventils 15 wirkenden Steuerdruck zu beeinflussen, ist ein erstes Pilotventil 24 vorgesehen. Das erste Pilotventil 24 ist ein 3/2-Wegeventil und wird durch eine Ventilfeder 25 in einer ersten Richtung mit einer Kraft beaufschlagt. In entgegengesetzter Richtung wirkt die Kraft eines Elektromagneten 26. Anstelle des Elektromagneten 26 ist auch ein andere Aktuator verwendbar. Ebenso ist es möglich, entgegengesetzt zu der Kraft der Ventilfeder 25 eine hydraulische Kraft auf das erste Pilotventil 24 wirken zu lassen. In Abhängigkeit von dem Kräfteverhältnis der Ventilfeder 25 und des Elektromagneten 26 wird das erste Pilotventil 24 in seine erste Schaltposition 27 oder in seine zweite Schaltposition 28 gebracht. Die Ventilfeder 25 beaufschlagt das erste Pilotventil 24 dabei in Richtung seiner ersten Schaltposition 27. In der ersten Schaltposition 27 verbindet das erste Pilotventil 25 eine erste Steuerdruckleitung 29 mit einem ersten Druckzuführungsleitungszweig 32.

Der in dem ersten Druckzuführungsleitungszweig 32 herrschende Druck wird somit in der ersten Schaltposition 27 des ersten Pilotventils 24 über die damit verbundene erste Steuerdruckleitung 29 der Steuerfläche 18 des ersten Sitzventils 15 zugeführt. Befindet sich folglich das erste Pilotventil 24 in der durch die Ventilfeder 25 vorgegebenen ersten Schaltposition 27, so wird das erste Sitzventil 15 in Schließrichtung beaufschlagt. Wird dagegen der Elektromagnet 26 mit einem Steuersignal beaufschlagt, so wirkt auf das erste Pilotventil 24 durch den Elektromagneten. 26 eine Kraft, die das erste Pilotventil 24 entgegen der Kraft der Ventilfeder 25 in seine zweite Schaltposition 28 bringt. In der zweiten Schaltposition 28 ist die erste Steuerdruckleitung 29 mit einer ersten Entspannungsleitung 30 verbunden. Über die erste Entspannungsleitung 30 wird der in der ersten Steuerdruckleitung 29 herrschende Druck in ein Tankvolumen 31 entspannt. Dementsprechend nimmt die hydraulische Kraft, welche auf die Steuerfläche 18 des ersten Sitzventils 15 wirkt, ab und das erste Sitzventil 15 wird durch die hydraulische Kraft in der ersten Kammer 22 sowie in der zweiten Kammer 23 in seine geöffnete Position gebracht. Durch Bestromen des Elektromagneten 26 wird somit eine Verbindung zwischen der ersten Arbeitsleitung 5 und dem ersten Arbeitsleitungsanschluss 8 hergestellt.

Der zur Erzeugung der Steuerkraft auf die Steuerfläche 18 erforderliche Druck wird über den ersten Druckzuführungsleitungszweig 32 und das erste Pilotventil 24 zugeführt. Der erste Druckzuführungsleitungszweig 32 ist hierzu mit einer Druckzuführungsleitung 34 verbunden. Die Druckzuführungsleitung 34 ist mit einem Ausgang eines Wechselventils 35 verbunden. Durch das Wechselventil 35 wird in nachfolgend noch beschriebener Weise jeweils der höchste in dem System verfügbare Druck bereitgestellt.

Zur Ansteuerung des zweiten Sitzventils 16 ist ein zweites Pilotventil 36 vorgesehen. Das zweite Pilotventil 36 ist vergleichbar mit dem ersten Pilotventil 24 aufgebaut. Auf eine erneute Beschreibung wird der Übersichtlichkeit halber verzichtet. Durch das zweite Pilotventil 36 ist eine zweite Steuerdruckleitung 27 mit einem zweiten Druckzuführungsleitungszweig 38 verbindbar. Das zweite Pilotventil 36 wird ebenfalls durch eine Feder in dieser Stellung gehalten. Wird das zweite Pilotventil 36 mit einem Steuersignal an einem Elektromagneten beaufschlagt, so wird es in seine zweite Schaltposition gebracht, in der die zweite Steuerdruckleitung 37 mit einer zweiten Entspannungsleitung 39 verbunden ist. Bei Beaufschlagen des zweiten Pilotventils 36 mit einem Steuersignal wird folglich der auf die Steuerfläche des zweiten Sitzventils 16 wirkende Steuerdruck reduziert, indem die zweite Steuerdruckleitung 27 in das Tankvolumen 31 entspannt wird. Infolge dessen wird das zweite Sitzventil 16 bei Anliegen eines Steuersignals an dem Pilotventil 36 in seine geöffnete Position gebracht. In der geöffneten Position des zweiten Sitzventils 16 sind die zweite Verbindungsleitung 14 und die zweite Arbeitsleitung 6 miteinander verbunden.

Während eines normalen Fahrbetriebs sind sowohl das erste Pilotventil 24 als auch das zweite Pilotventil 36 mit einem Steuersignal beaufschlagt. Die erste Steuerdruckleitung 29 und die zweite Steuerdruckleitung 37 werden folglich in das Tankvolumen 31 entspannt und das erste Sitzventil 15 und das zweite Sitzventil 16 in ihre jeweilige offene Position gebracht. Damit wird ein geschlossener hydraulischer Kreislauf ausgebildet, indem in an sich bekannter Weise die Hydropumpe 3 und der Hydromotor 7 als hydrostatisches Getriebe angeordnet sind. Das Übersetzungsverhältnis des hydrostatischen Getriebes wird durch das Einstellen des Fördervolumens der Hydropumpe 3 bzw. des Schluckvolumens des Hydromotors 7 mittels der ersten Verstellvorrichtung 11 bzw. der zweiten Verstellvorrichtung 12 eingestellt.

Der hydrostatische Antrieb 1 umfasst weiterhin einen ersten Speicher 40 und einen zweiten Speicher 41. Der erste Speicher 40 ist als Hochdruckspeicher ausgeführt. Der zweite Speicher 41 ist als Niederdruckspeicher ausgebildet. Vorzugsweise sind beide Speicher 40, 41 als hydropneumatische Speicher ausgebildet, in denen eine kompressibles Volumen bei Zuführung von Druckmittel komprimiert wird.

Der erste Speicher 40 ist über eine Hochdruckspeicherleitung 33 mit dem hydrostatischen Kreislauf verbindbar. Die Hochdruckspeicherleitung 33 verzweigt sich in einen ersten Hochdruckspeicherleitungszweig 42 und einen zweiten Hochdrucksspeicherleitungszweig 43. In dem ersten Hochdrucksspeicherleitungszweig 42 ist ein drittes Sitzventil 44 angeordnet. In dem zweiten Hochdrucksspeicherleitungszweig 43 ist ein viertes Sitzventil 45 angeordnet. Das dritte Sitzventil 44 und das vierte Sitzventil 45 sind ebenfalls jeweils mit dem Steuerdruck über eine dritte Steuerdruckleitung 48 bzw. eine vierte Steuerdruckleitung 49 in Schließrichtung beaufschlagbar. Ebenfalls in Schließrichtung wirkt auf das dritte Sitzventil 44 und das vierte Sitzventil 45 jeweils eine Schließfeder.

Befindet sich das dritte Sitzventil 44 in seiner geschlossenen Position, so ist der erste Hochdrucksspeicherleitungszweig 42 unterbrochen. Befindet sich das vierte Sitzventil 45 in seiner geschlossenen Position, so ist der zweite Hochdrucksspeicherleitungszweig 43 unterbrochen.

Der erste Hochdrucksspeicherleitungszweig 42 mündet in die erste Arbeitsleitung 5 aus. Entsprechend mündet der zweite Hochdrucksspeicherleitungszweig 43 in die zweite Arbeitsleitung 6 aus. Befinden sich das dritte Sitzventil 44 und das vierte Sitzventil 45 in ihrer jeweils geschlossenen Position, ist somit keine durchströmbare Verbindung von der ersten Arbeitsleitung 5 zu dem ersten Speicher 40 und auch keine Verbindung von der zweiten Arbeitsleitung 6 zu dem ersten Speicher 40 vorhanden.

Die dritte Steuerdruckleitung 48 ist in einer ersten Schaltposition eines dritten Pilotventils 46 mit einem dritten Druckzuführungsleitungszweig 50 verbunden. Das dritte Pilotventil 46 wird in Richtung dieser Schaltposition mit einer Ventilfeder beaufschlagt. In entgegengesetzter Richtung wirkt wiederum ein Elektromagnet, der das dritte Pilotventil 46 in bereits beschriebener Weise mit einer Kraft entgegen der Kraft der Ventilfeder beaufschlagen kann. Wird der Elektromagnet mit einem Steuersignal beaufschlagt, so bringt er das dritte Pilotventil 46 in seiner zweite Schaltposition. Die dritte Steuerdruckleitung 48 wird mit einer dritten Entspannungsleitung 52 in dieser Position verbunden, so dass die dritte Steuerdruckleitung 48 in das Tankvolumen 31 entspannt wird. Infolge dessen wird das dritte Sitzventil 44 durch den in dem ersten Hochdruckspeicherleitungszweig 42 herrschenden Druck in seine geöffnete Position gebracht. In der geöffneten Position des dritten Sitzventils 44 ist die erste Arbeitsleitung 5 über den ersten Hochdruckspeicherleitungszweig 42 und die Hochdruckspeicherleitung 33 mit dem ersten Speicher 40 verbunden.

Entsprechend der zuvor beschriebenen Anordnung ist auch das vierte Sitzventil 45 durch ein viertes Pilotventil 47 ansteuerbar. Eine vierte Steuerdruckleitung 49 ist über das vierte Pilotventil 47 entweder mit einem vierten Druckzuführungsleitungszweig 51 oder mit einer vierten Entspannungsleitung 53 verbindbar. In der Ruheposition des vierten Pilotventils 47 verbindet das vierte Pilotventil 47 die vierte Steuerdruckleitung 49 mit dem vierten Druckzuführungsleitungszweig 51. Bei Beaufschlagen eines Elektromagneten wird das vierte Pilotventil 47 in seine zweite Schaltposition verstellt, in der die vierte Steuerdruckleitung 49 mit der vierten Entspannungsleitung 53 verbunden ist. In bereits beschriebener Weise führt dies zu einer Öffnung des vierten Sitzventils 45. In der geöffneten Position des Sitzventils 45 ist die zweite Arbeitsleitung 6 mit dem ersten Speicher 40 über den zweiten Hochdruckspeicherleitungszweig 43 verbunden.

Der zweite Speicher 41 ist als Niederdruckspeicher ausgeführt und über eine Niederdruckspeicherleitung 54 mit dem hydraulischen Kreislauf verbindbar. Die Niederdruckspeicherleitung 54 verzweigt sich in einen ersten Niederdruckspeicherleitungszweig 55 und einen zweiten Niederdruckspeicherleitungszweig 56. In dem ersten Niederdruckspeicherleitungszweig 55 ist ein fünftes Sitzventil 57 angeordnet. In dem zweiten Niederdruckspeicherleitungszweig 56 ist ein sechstes Sitzventil 58 angeordnet. Der erste Niederdruckspeicherleitungszweig 55 mündet in der ersten Verbindungsleitung 13 aus. Der zweite Niederdruckspeicherleitungszweig 56 mündet in der zweiten Verbindungsleitung 14 aus. Damit ist in der geschlossenen Position des fünften Sitzventils 57 die Verbindung zwischen der ersten Verbindungsleitung 13 und der Niederdruckspeicherleitung 54 unterbrochen. Ebenso unterbricht das sechste Sitzventil 58 die Verbindung zwischen der zweiten Verbindungsleitung 14 und der Niederdruckspeicherleitung 54.

Das fünfte Sitzventil 57 wird durch ein fünftes Pilotventil 59 angesteuert. Um das fünfte Sitzventil 57 in Schließrichtung mit einer hydraulischen Kraft zu beaufschlagen, verbindet das fünfte Pilotventil 59 eine fünfte Steuerdruckleitung 61 mit einem fünften Druckzuführungsleitungszweig 63. Wird dagegen das fünfte Pilotventil 59 an einem Elektromagneten mit einer Steuerkraft beaufschlagt, so wird entgegen der Kraft seiner Ventilfeder das fünfte Pilotventil 59 in seine zweite Schaltposition gebracht, in der die fünfte Steuerdruckleitung 51 mit einer fünften Entspannungsleitung 65 verbunden ist. Als Folge der Entspannung des in der fünften Steuerdruckleitung 61 herrschenden Drucks in das Tankvolumen 31 öffnet das fünfte Sitzventil 57 und die erste Verbindungsleitung 13 wird über den ersten Niederdruckspeicherleitungszweig 55 mit der Niederdruckspeicherleitung 54 und somit mit dem zweiten Speicher 41 verbunden.

In entsprechender Weise wird das sechste Sitzventil 58 durch ein sechstes Pilotventil 60 angesteuert. In seiner Ruheposition, die wiederum, durch eine Ventilfeder definiert ist, wird eine sechste Steuerdruckleitung 62 durch das sechste Pilotventil 60 mit einem sechsten Druckzuführungsleitungszweig 64 verbunden.

Wird dagegen das sechste Pilotventil 60 mit einem Steuersignal beaufschlagt, so wird es durch seinen Elektromagneten entgegen der Kraft der Ventilfeder in seine andere Endposition gebracht. In dieser Endposition ist die sechste Steuerdruckleitung 62 mit einer sechsten Entspannungsleitung 66 verbunden. Das aus der sechsten Steuerdruckleitung 62 über die sechste Entspannungsleitung 60 in das Tankvolumen 31 entweichende Druckmittel führt zu einer Reduzierung der Steuerkraft an dem sechsten Sitzventil 58. Durch die Reduzierung der Steuerkraft, die das sechste Sitzventil 58 in seine Schließrichtung beaufschlagt, kommt es zu einem Übergewicht der in entgegengesetzter Richtung wirkenden Kräfte, die durch die in dem zweiten Niederdruckspeicherleitungszweig 56 wirkenden Drücke erzeugt wird. Infolge dessen wird das sechste Sitzventil 58 in seine geöffnete Position gebracht, in der eine durchströmbare Verbindung in dem zweiten Niederdruckspeicherleitungszweig 56 existiert.

Der erste bis sechste Druckzuführungsleitungszweig 32, 38, 50, 51, 63 und 64 sind mit einer Druckzuführungsleitung 34 verbunden. Die Druckzuführungsleitung 34 ist mit einem Ausgang des Wechselventils 35 verbunden. An den beiden Eingängen des Wechselventils 35 mündet eine Speicherverbindungsleitung 67 bzw. eine Motorverbindungsleitung 68 aus. Über die Speicherverbindungsleitung 67 wird der Eingang des Wechselventils 35 mit dem in der Hochdruckspeicherleitung 33 und damit mit dem in dem ersten Speicher 40 herrschenden Druck beaufschlagt. An dem anderen Eingang des Wechselventils 35 wirkt über die Pumpenverbindungsleitung 68 jeweils der höhere der Drücke der ersten bzw. zweiten Arbeitsleitung 5, 6. Damit wird durch das Wechselventil 35 an dessen Ausgang jeweils der höchste in dem System zur Verfügung stehende Druck zur Ansteuerung der Sitzventile 15, 16, 44, 45, 57, 58 zur Verfügung gestellt.

Der hydrostatische Antrieb 1 umfasst weiterhin eine Speiseeinrichtung 69. Die Speiseeinrichtung 69 weist eine Speisepumpe 70 auf. Die Speisepumpe 70 ist zur Förderung in lediglich einer Richtung vorgesehen und vorzugsweise als Konstantpumpe ausgeführt. Die Speisepumpe 70 ist gemeinsam mit der verstellbaren Hydropumpe 3 auf der Antriebswelle 4 angeordnet und wird somit über den Antriebsmotor 2 angetrieben. Die Speisepumpe 70 saugt aus dem Tankvolumen 31 Druckmittel an und fördert es in eine Speiseleitung 71. Die Speiseleitung 71 verzweigt sich in einen mit der ersten Arbeitsleitung 5 verbundenen ersten Speiseleitungszweig 72 und einen mit der zweiten Arbeitsleitung 6 verbundenen zweiten Speiseleitungszweig 73. In dem ersten Speiseleitungszweig 72 ist ein erstes Rückschlagventil 74 vorgesehen. In dem zweiten Speiseleitungszweig 73 ist ein zweites Rückschlagventil 75 vorgesehen. Die beiden Rückschlagventile 74 bzw. 75 sind so angeordnet, dass sie in Richtung auf die erste Arbeitsleitung 5 bzw. die zweite Arbeitsleitung 6 hin öffnen, sofern der Druck in der Speiseleitung 71 größer ist als der jeweilige Arbeitsleitungsdruck in der ersten Arbeitsleitung 5 bzw. der zweiten Arbeitsleitung 6.

Zur Absicherung des hydrostatischen Antriebs 1 kann in Ergänzung zu dem ersten Rückschlagventil 74 sowie zu dem zweiten Rückschlagventil 75 jeweils parallel ein Druckbegrenzungsventil angeordnet sein, welches die jeweilige Arbeitsleitung 5, 6 bei Entstehen eines kritisch hohen Drucks in Richtung der Speiseleitung 71 entspannt.

Die Speiseeinrichtung 69 ist über eine Druckhalteleitung 76 mit dem zweiten Speicher 41 verbindbar. Hierzu verbindet die Druckhalteleitung 76 einen Ausgang eines Schaltventils 77 mit der Niederdruckspeicherleitung 54. Das Schaltventil 77 befindet sich in Abhängigkeit von der Kraft einer Druckfeder 78 und einer entgegengesetzt wirkenden hydraulischen Kraft in einer ersten oder einer zweiten Schaltposition. Ist die hydraulische Kraft größer als die Kraft der Druckfeder 78, so verbindet das Schaltventil 77 die Speiseleitung 71 mit einer Ablaufleitung 81. Die Ablaufleitung 81 ist über ein erstes Druckbegrenzungsventil 80 mit dem Tankvolumen 31 verbindbar. Unterschreitet die hydraulische Kraft an dem Schaltventil 77 die Kraft der Druckfeder 78, so verschiebt die Druckfeder 78 das Schaltventil 77 in seine andere Schaltposition, in der die Speiseleitung 71 mit der Druckhalteleitung 76 verbunden ist.

Durch die Vergleichsleitung 79 wird der Druck der Druckhalteleitung 76 der Messfläche zugeführt. Somit schaltet in Abhängigkeit von dem in dem zweiten Speicher 41 herrschenden Druck das Schaltventil 77 in seine erste bzw. zweite Schaltposition. Die Druckhalteleitung 76 ist über ein zweites Druckbegrenzungsventil 82 mit dem Tankvolumen 31 verbindbar.

Sobald der Druck in dem zweiten Speicher 41 unter einen durch die Druckfeder 78 eingestellten Wert sinkt, wird das Schaltventil 77 in eine Schaltposition gebracht, in der die Speiseleitung 71 mit der Druckhalteleitung 76 verbunden ist. In dieser Schaltposition wird durch die Speisepumpe 70 Druckmittel in den zweiten Speicher 41 gefördert. Infolge dessen steigt der Druck in dem zweiten Speicher 41 an, bis ein ausreichender Druck erreicht ist und infolge dessen die auf das Schaltventil 77 wirkende hydraulische Kraft das Schaltventil 77 in seine entgegengesetzte Schaltposition bringt. In dieser entgegengesetzten Schaltposition wird der in der Speiseeinrichtung 69 herrschende Druck durch das Druckbegrenzungsventil 80 begrenzt. Vorzugsweise ist das erste Druckbegrenzungsventil 80 beispielsweise auf 20bar eingestellt. Das zweite Druckbegrenzungsventil 82 ist dagegen auf einen höheren Druck, beispielsweise 40bar eingestellt, der dem Schaltdruck des Schaltventils 77 entspricht.

Mit Hilfe der Verbindung von der Speiseeinrichtung 69 zu dem zweiten Speicher 41 ist somit gewährleistet, dass durch Leckage während eines regenerativen Betriebs des hydrostatischen Antriebs 1 aus dem Kreislauf entweichendes Druckmittel wieder zugeführt wird.

Wie es bereits einleitend ausgeführt wurde, ist während eines normalen Fahrbetriebs ein geschlossener hydraulischer Kreislauf vorgesehen, in dem die Hydropumpe 3 und der Hydromotor 7 angeordnet sind. Hierzu sind das erste Pilotventil 24 und das zweite Pilotventil 36 mit einem Steuersignal beaufschlagt. Das erste Sitzventil 15 und das zweite Sitzventil 16 befinden sich in ihrer geöffneten Position und der geschlossene hydraulische Kreislauf besteht aus der ersten Arbeitsleitung 5, der ersten Verbindungsleitung 13, der zweiten Verbindungsleitung 14 und der zweiten Arbeitsleitung 6. Für die nachfolgende Beschreibung wird angenommen, dass eine Vorwärtsfahrt ein Fördern von Druckmittel durch die Hydropumpe 3 in die erste Arbeitsleitung 5 bedeutet. Dementsprechend ist die erste Arbeitsleitung 5 bei Vorwärtsfahrt die förderseitige Arbeitsleitung und die zweite Arbeitsleitung 6 die saugseitige Arbeitsleitung.

Ausgehend von einer Vorwärtsfahrt soll zunächst das betrachtete Fahrzeug in Schiebebetrieb geraten bzw. abgebremst werden. Im Schiebebetrieb wird der erste Speicher 40 zum Speichern der kinetischen Energie des Fahrzeugs eingesetzt. In den ersten Speicher 40 ist daher Druckmittel durch den nun als Pumpe wirkenden Hydromotor 7 zu fördern. Während des Bremsvorgangs wird Druckmittel aus dem zweiten Speicher 41 entnommen und durch den Hydromotor 7 in den ersten Speicher 40 gepumpt. Hierzu ist im Falle der beschriebenen Vorwärtsfahrt das fünfte Pilotventil 59 mit einem Steuersignal beaufschlagt. Infolge dessen ist das fünfte Sitzventil 57 in seiner geöffneten Position und Druckmittel kann aus dem zweiten Speicher 41 über den ersten Niederdruckspeicherleitungszweig 55 durch den Hydromotor 7 an dessen erstem Arbeitsleitungsanschluss 8 angesaugt werden. Das durch den Hydromotor 7 aus dem zweiten Speicher 41 angesaugte Druckmittel wird durch den Hydromotor 7 in die zweite Verbindungsleitung 14 gefördert.

Das zweite Pilotventil 36 ist ebenfalls mit einem Steuersignal beaufschlagt, so dass sich das zweite Sitzventil 16 ebenfalls in seiner geöffneten Position befindet. Weiterhin ist das vierte Pilotventil 47 mit einem Steuersignal beaufschlagt und das vierte Sitzventil 45 wird durch den Druck des zweiten Hochdruckspeicherleitungszweigs 43 ebenfalls in seine geöffnete Position gebracht. Die übrigen Pilotventile 46, 24 und 60 werden dagegen nur durch ihre jeweiligen Ventilfedern beaufschlagt und die zugeordneten Sitzventile 44, 15 und 58 befinden sich in ihrer geschlossenen Position.

Das durch den Hydromotor 7 geförderte Druckmittel wird folglich über die zweite Verbindungsleitung 14 in Richtung auf die zweite Arbeitsleitung 6 hin und weiter über den zweiten Hochdruckspeicherleitungszweig 43 in den ersten Speicher 40 gefördert.

Nach einem solchen Bremsvorgang ist in dem ersten Speicher 40 Druckmittel unter hohem Druck gespeichert. Die gespeicherte Druckenergie entsteht dabei durch den Abbau der kinetischen Energie des Fahrzeugs. Soll nach einem solchermaßen beschriebenen Bremsvorgang während Vorwärtsfahrt erneut in Vorwärtsfahrtsrichtung beschleunigt werden, so muss das Druckmittel aus dem ersten Speicher 40 in geeigneter Weise dem hydrostatischen Antrieb 1 zugeführt werden. Hier erfolgt die Entnahme des Druckmittels aus dem ersten Speicher 40 in die jeweils saugseitige Arbeitsleitung. Die saugseitige Arbeitsleitung ist jeweils im Falle einer Vorwärtsfahrt die zweite Arbeitsleitung 6. Zur Entnahme von Druckmittel und dementsprechend zur Rückgewinnung von Energie wird das vierte Pilotventil 47 mit einem Steuersignal beaufschlagt. Das vierte Sitzventil 45 wird in die geöffnete Position gebracht und das Druckmittel aus dem ersten Speicher 40 wird der zweiten Arbeitsleitung 6 und damit der Saugseite der Hydropumpe 3 zugeführt. Die Hydropumpe 3 saugt somit aus der unter einem Vordruck stehenden zweiten Arbeitsleitung 6 an und kann zusätzlich mit dem Drehmoment des Antriebsmotors 2 beaufschlagt werden. Dies führt zu einer Addition der Momente und der Antriebsmotor 2 kann mit geringerer Leistung betrieben werden. Eine Kraftstoffeinsparung ist die Folge. Mit dem Arbeitsleitungsdruck in der ersten Arbeitsleitung 5 wird der Hydromotor 7 beaufschlagt. Hierzu wird das erste Pilotventil 24 mit einem Steuersignal beaufschlagt, so dass sich das erste Sitzventil 15 in seiner geöffneten Position befindet. Der erste Arbeitsleitungsanschluss 8 des Hydromotors 7 ist somit mit der förderseitigen Arbeitsleitung 5 verbunden. Das aus dem Hydromotor 7 stromabwärts an dem zweiten Arbeitsleitungsanschluss 9 austretende Druckmittel wird unter Erzeugung eines Abtriebsdrehmoments an der Abtriebswelle 10 entspannt und wird über das geöffnete sechste Sitzventil 58 in den zweiten Speicher 41 gefördert. Zum Öffnen des sechsten Sitzventils 58 wird das sechste Pilotventil 60 mit einem Steuersignal beaufschlagt. Die übrigen Sitzventile (16, 44 und 57) sind jeweils in ihrer geschlossenen Position, in dem die zugeordneten Pilotventile (36, 46 und 59) nicht mit einem Steuersignal beaufschlagt sind.

In entsprechender Weise ist sowohl die Speicherung der kinetischen Energie als auch die Rückgewinnung der kinetischen Energie bei Rückwärtsfahrt möglich. Eine Rückwärtsfahrt führt zu einer Umkehrung der saug- und förderseitigen Arbeitsleitung bezüglich der Hydropumpe 3. Dementsprechend ist ausgehend von dem vorstehend beschriebenen Beispiel bei Rückwärtsfahrt die zweite Arbeitsleitung 6 die förderseitige Arbeitsleitung bezüglich der Hydropumpe 3 und die erste Arbeitsleitung 5 wird zur saugseitigen Arbeitsleitung bezüglich der Hydropumpe 3. Folglich ändert sich auch die Strömungsrichtung durch den Hydromotor 7, so dass bei Rückwärtsfahrt der erste Arbeitsleitungsanschluss 8 des Hydromotors 7 der stromabwärtige Arbeitsleitungsanschluss und der zweite Arbeitsleitungsanschluss 9 der stromaufwärtige Arbeitsleitungsanschluss des Hydromotors 7 ist. Um die jeweiligen Schaltzustände noch einmal übersichtlich darzustellen, sind für Vorwärts- und Rückwärtsfahrt sowohl ein Beschleunigungsvorgang als auch ein Bremsvorgang in der nachfolgenden Tabelle dargestellt. Der Einfachheit halber werden lediglich die mit einem Steuersignal beaufschlagten Pilotventile angegeben. Dies bedeutet, dass die übrigen Pilotventile jeweils kein Steuersignal erhalten und die Ihnen zugeordneten Sitzventile sich in der geschlossenen Position befinden.

| | Bestromt (Pilotventil) | Offen (Sitzventil) |
|---|---|---|
| Vorwärts beschleunigen | 24, 47, 60 | 15, 45, 58 |
| Vorwärts bremsen | 36, 47, 59 | 16, 45, 57 |
| Rückwärts beschleunigen | 36, 46, 59 | 16, 44, 57 |
| Rückwärts bremsen | 24, 46, 60 | 15, 44, 58 |

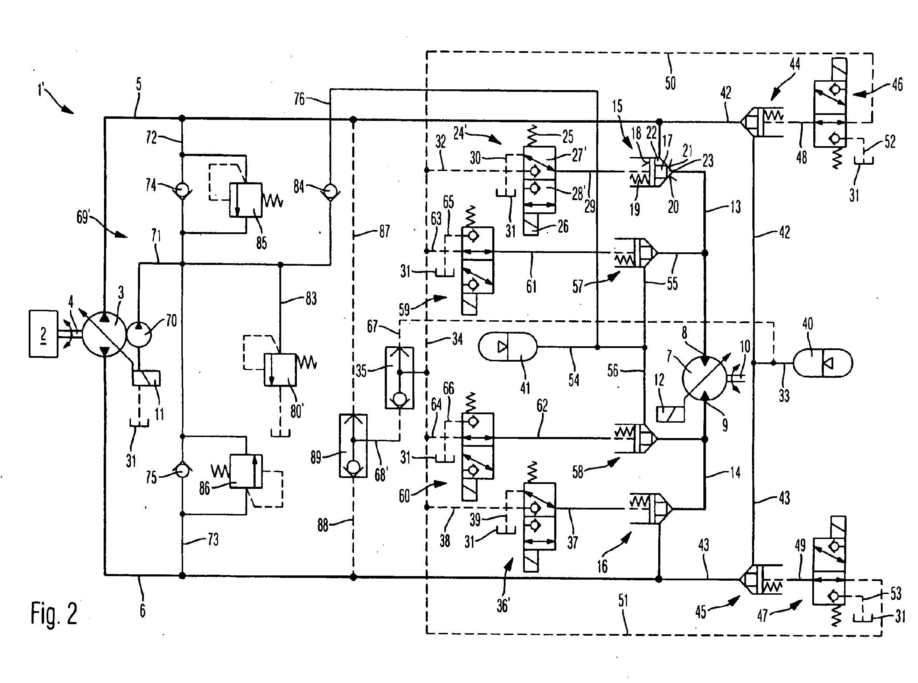

In der Fig. 2 ist ein zweites Ausführungsbeispiel des hydrostatischen Antriebs 1' dargestellt. Dabei werden, um unnötige Wiederholungen zu vermeiden, für gleiche Bauelemente gleiche Bezugszeichen verwendet. Auf deren erneute Beschreibung wird verzichtet.

Im Unterschied zu dem Ausführungsbeispiel der Fig. 1 ist bei dem zweiten Ausführungsbeispiel der Fig. 2 anstelle des ersten Druckbegrenzungsventils 80 und des zweiten Druckbegrenzungsventils 82 lediglich ein Speisedruckbegrenzungsventil 80' vorgesehen. Das Speisedruckbegrenzungsventil 80' ist über eine Speisedruckbegrenzungsleitung 83 mit der Speiseleitung 71 verbunden. Ferner ist die Speiseleitung 71 mit der Druckhalteleitung 76 verbunden. Beim Übergang von der Speiseleitung 71 zu der Druckhalteleitung 76 ist ein drittes Rückschlagventil 84 vorgesehen. Das Rückschlagventil kann vorteilhaft auch beim Ausführungsbeispiel der Fig. 1 eingesetzt werden.

Das dritte Rückschlagventil 84 öffnet in Richtung auf die Druckhalteleitung 76 hin. Durch das Speisedruckbegrenzungsventil 80' wird in der Speiseleitung 71 eine Druckbegrenzung auf einen maximal zulässigen Speisedruck bewirkt. Dieser liegt beispielsweise bei 25 bar. Sofern in dem zweiten Speicher 41 ein Druck herrscht, der diesen maximal zulässigen Speisedruck überschreitet, geht das dritte Rückschlagventil 84 in seine geschlossene Position und trennt somit den zweiten Speicher 41 von der geänderten Speiseeinrichtung 69'. Ist jedoch durch Leckage beispielsweise der Druck in dem zweiten Speicher 41 unter den Speisedruck abgesunken, so öffnet das dritte Rückschlagventil 84 und der zweite Speicher 41 wird aus der geänderten Speiseeinrichtung 69' mit Hilfe der Speisepumpe 70 befüllt.

Ferner wird im Gegensatz zu dem Ausführungsbeispiel der Fig. 1 der jeweils höhere der beiden Arbeitsleitungsdrücke in der ersten Arbeitsleitung 5 bzw. der zweiten Arbeitsleitung 6 nicht unmittelbar über die Hydropumpe 3 dem Wechselventil 35 zugeführt. Vielmehr ist ein weiteres Wechselventil 89 vorgesehen. Das weitere Wechselventil 89 ist über eine erste Wechselventilleitung 87 mit der ersten Arbeitsleitung 5 verbunden. Über eine zweite Wechselventilleitung 88 ist das weitere Wechselventil 89 mit der zweiten Arbeitsleitung 6 verbunden. Der Ausgang des weiteren Wechselventils 89, an dem der jeweils höhere der beiden Arbeitsleitungsdrücke anliegt, ist über eine Wechselventilverbindungsleitung 68' mit einem Eingang des Wechselventils 35 verbunden. Über das Wechselventil 35 wird wie schon beim Ausführungsbeispiel der Fig. 1 somit der höhere der beiden Arbeitsleitungsdrücke mit dem in der Speicherverbindungsleitung 67 herrschenden Druck verglichen und der Druckzuführungsleitung 34 zugeführt.

Ferner sind bei dem ersten Pilotventil 24' und dem zweiten Pilotventil 36' des zweiten Ausführungsbeispiels gegenüber dem ersten Ausführungsbeispiel die erste Schaltposition 27' und die zweite Schaltposition 28' gegeneinander getauscht. Damit wird in dem Ruhezustand des ersten Pilotventils 24', der durch die Ventilfeder 25 bestimmt ist, der erste Druckzuführungsleitungszweig 32 mit der ersten Steuerdruckleitung 29 verbunden. Dementsprechend ist in der Ruheposition des zweiten Pilotventils 36' der zweite Druckzuführungsleitungszweig 38 mit der zweiten Steuerdruckleitung 37 verbunden. Damit wird erreicht, dass während eines normalen hydrostatischen Fahrbetriebs das erste Sitzventil 15 und das zweite Sitzventil 16 jeweils in ihrer geöffneten Position sind und die Hydropumpe 3 und der Hydromotor 7 über die erste Arbeitsleitung 5, die zweite Arbeitsleitung 6 sowie die erste Verbindungsleitung 13 und die zweite Verbindungsleitung 14 in einem einfachen geschlossenen hydraulischen Kreislauf miteinander verbunden sind. Ein Bestromen der Elektromagnete der Pilotventile 24' und 36' ist nicht erforderlich.

Zur Absicherung der ersten Arbeitsleitung 5 und der zweiten Arbeitsleitung 6 gegen überhöhte Arbeitsleitungsdrücke ist parallel zu dem ersten Rückschlagventil 74 ein erstes paralleles Druckbegrenzungsventil 85 angeordnet. Das erste parallele Druckbegrenzungsventil 85 öffnet in Richtung zu der Speiseleitung 71 hin, sofern der Druck in der ersten Arbeitsleitung 5 einen durch eine Feder des ersten parallelen Druckbegrenzungsventils 85 eingestellten Wert überschreitet.

In vergleichbarer Weise ist ein zweites paralleles Druckbegrenzungsventil 86 vorgesehen. Das zweite parallele Druckbegrenzungsventil 86 ist parallel zu dem ersten Rückschlagventil 75 angeordnet. Es öffnet, sofern der Druck in der zweiten Arbeitsleitung 6 den an dem zweiten parallelen Druckbegrenzungsventil 86 durch eine weitere Feder eingestellten kritischen Druck überschreitet.

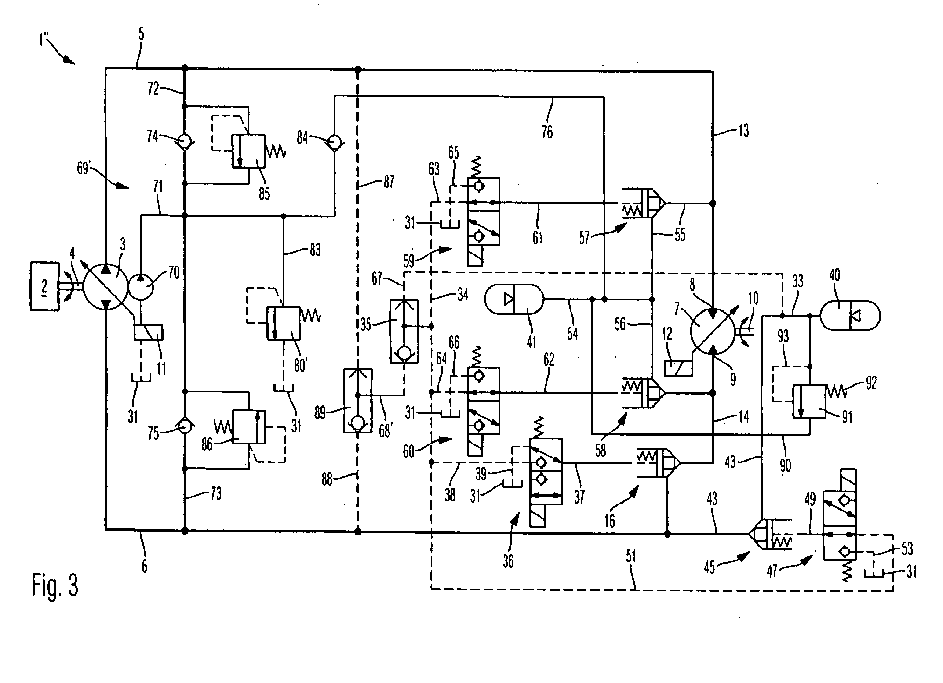

Bei dem dritten Ausführungsbeispiel eines hydrostatischen Antriebs 1", das erfindungsgemäß und in der Fig. 3 dargestellt ist, ist eine Rückgewinnung von kinetischer Energie lediglich für eine Fahrtrichtung vorgesehen. Diese Fahrtrichtung entspricht der vorbeschriebenen Vorwärtsfahrt, bei der die Hydropumpe 3 in die erste Arbeitsleitung 5 fördert. Der Bauaufwand für einen solchen hydrostatischen Antrieb 1", der lediglich für eine Fahrtrichtung eine Energierückgewinnung vorsieht, verringert sich erheblich. So ist insbesondere das erste Pilotventil 24' sowie das erste Sitzventil 15 ebenso wenig erforderlich wie das dritte Pilotventil 46 sowie das dritte Sitzventil 44 und die entsprechend nicht erforderlichen Leitungen. Das in der Fig. 3 gezeigte dritte Ausführungsbeispiel beruht auf dem in der Fig. 2 gezeigten Ausführungsbeispiel, sodass die übrigen Elemente mit den bereits zu Fig. 2 beschriebenen übereinstimmen.

Zusätzlich ist bei dem Ausführungsbeispiel der Fig. 3 eine Sicherungsleitung 90 vorgesehen. Die Sicherungsleitung 90 verbindet die Niederdruckspeicherleitung 54 mit der Hochdruckspeicherleitung 33. In der Sicherungsleitung 90 ist ein Speicherdruckbegrenzungsventil 91 angeordnet. Das Speicherdruckbegrenzungsventil 91 sichert den ersten Speicher 40 gegen eine unzulässige Drucküberhöhung ab. Gleichzeitig ermöglich es, dass durch den hydrostatischen Antrieb 1" eine hydrostatische Bremsung weiter durchgeführt wird, auch dann, wenn der erste Speicher 40 bereits vollständig aufgeladen ist. Hierzu wird durch eine Speicherdruckbegrenzungsventilfeder 92 ein Grenzwert für den Druck in dem ersten Speicher 40 eingestellt. Dieser Grenzwert entspricht dem Druck in dem ersten Speicher 40 bei dem maximalen Ladezustand des ersten Speichers 40.

Der in der Hochdruckspeicherleitung 33, die mit der Sicherungsleitung 90 verbunden ist, herrschende Speicherdruck des ersten Speichers 40 wird über eine Messleitung 93 einer Druckmessfläche des Speicherdruckbegrenzungsventils 91 zugeführt. Der dort erzeugte hydrostatische Druck wirkt entgegen der Kraft der Speicherdruckbegrenzungsventilfeder 92. Sofern der erste Speicher 40 vollständig gefüllt ist, öffnet das Speicherdruckbegrenzungsventil 91 und verbindet die Hochdruckspeicherleitung 33 mit der Niederdruckspeicherleitung 54. Damit fördert im Schiebebetrieb der Hydromotor 7 das Druckmittel nicht mehr in das erste Speicherelement 40, sondern über die Sicherungsleitung 90 und das darin angeordnete Speicherdruckbegrenzungsventil 91 zurück in die Niederdruckspeicherleitung 54. Es entsteht somit ein geschlossener hydraulischer Kreislauf, in dem das Speicherdruckbegrenzungsventil 91 den Volumenstrom drosselt und somit eine Bremswirkung erzeugt wird. Damit kann auch bei vollständig geladenen ersten Speicher 40 ein hydrostatisches Abbremsen erfolgen, ohne dass ein Volumenausgleich erforderlich ist.

Die Erfindung ist nicht auf das dargestellte Ausführungsbeispiel beschränkt, sondern umfast all durch die patentansprüche definiesten Ausgestaltungen.

## Patentansprüche

1. Hydrostatischer Antrieb umfassend eine Hydropumpe (3), die über eine erste Arbeitsleitung (5) mit einem ersten Arbeitsleitungsanschluss (8) und über eine zweite Arbeitsleitung (6) mit einem zweiten Arbeitsleitungsanschluss (9) eines Hydromotors (7) verbindbar ist und umfassend einen ersten Speicher (40) zum Speichern von Druckenergie und einen zweiten Speicher (41),
wobei der erste Speicher (40) zur Rückgewinnung der darin gespeicherten Druckenergie zumindest für eine Förderrichtung der Hydropumpe (3) mit der bei dieser Förderrichtung saugseitigen ersten bzw. zweiten Arbeitsleitung (5, 6) verbindbar ist,
**dadurch gekennzeichnet,**
**dass** der erste Speicher (40) und der zweite Speicher (41) über ein Speicherdruckbegrenzungsventil (91) direkt miteinander verbindbar sind.

2. Hydrostatischer Antrieb nach Anspruch 1,
**dadurch gekennzeichnet,**
**dass** zur Rückgewinnung der in dem ersten Speicher (40) gespeicherten Druckenergie der stromaufwärtige erste bzw. zweite Arbeitsleitungsanschluss (8, 9) mit der bezüglich der Hydropumpe (3) förderseitigen ersten bzw. zweiten Arbeitsleitung (5, 6) verbindbar ist und der jeweils andere, stromabwärtige Arbeitsleitungsanschluss (9, 8) mit dem zweiten Speicher (41) verbindbar ist.

3. Hydrostatischer Antrieb nach Anspruch 1 oder 2, **dadurch gekennzeichnet,**
**dass** zum Aufladen des ersten Speichers (40) der erste Speicher (40) zumindest für eine Strömungsrichtung mit dem stromabwärtigen ersten oder zweiten Arbeitsleitungsanschluss (8, 9) des Hydromotors (7) verbindbar ist und der stromaufwärtige zweite bzw. erste Arbeitsleitungsanschluss (9, 8) des Hydromotors (7) mit dem zweiten Speicher (41) verbindbar ist.

4. Hydrostatischer Antrieb nach einem der Ansprüche 1 bis 3,
**dadurch gekennzeichnet,**
**dass** zum Verbinden des ersten Speichers (40) mit der ersten bzw. zweiten Arbeitsleitung (5, 6) und/oder zum Verbinden des zweiten Speichers (41) mit dem ersten bzw. zweiten Arbeitlseitungsanschluss (8, 9) und/oder zum Verbinden des ersten bzw. zweiten Arbeitsleitungsanschlusses (8, 9) mit der ersten bzw. zweiten Arbeitsleitung (5, 6) jeweils ein Sitzventil (15, 16, 44, 45, 57, 58) vorgesehen ist.

5. Hydrostatischer Antrieb nach Anspruch 4,
**dadurch gekennzeichnet,**
**dass** die Sitzventile (15, 16, 44, 45, 57, 58) durch jeweils ein Pilotventil (24, 24', 36, 36', 46, 47, 59, 60) mit einem Steuerdruck beaufschlagbar sind.

6. Hydrostatischer Antrieb nach einem der Ansprüche 1 bis 5,
**dadurch gekennzeichnet,**
**dass** der zweite Speicher (41) mit einer Druckhalteleitung (76) verbunden ist, die mit einer Druckmittelquelle verbindbar ist.

7. Hydrostatischer Antrieb nach Anspruch 6,
**dadurch gekennzeichnet**
**dass** die Druckmittelquelle eine Speiseeinrichtung (69) ist.

8. Hydrostatischer Antrieb nach Anspruch 7,
**dadurch gekennzeichnet,**
**dass** die Speiseeinrichtung (69) eine in eine Speiseleitung (71) fördernde Speisepumpe (70) umfasst.

9. Hydrostatischer Antrieb nach Anspruch 8,
**dadurch gekennzeichnet,**
**dass** die Speiseleitung (71) über ein Schaltventil (77) mit der Druckhalteleitung (76) verbindbar ist.

10. Hydrostatischer Antrieb nach Anspruch 8,
**dadurch gekennzeichnet,**
**dass** die Speiseleitung (71) über ein in Richtung auf die Druckhalteleitung (76) hin öffnendes Rückschlagventil mit der Druckhalteleitung (76) verbunden ist.

## Claims

1. Hydrostatic drive comprising a hydraulic pump (3) that can be connected by means of a first working line (5) to a first working line connection (8) and by means of a second working line (6) to a second working line connection (9) of a hydraulic motor (7) and comprising a first accumulator (40) for storing pressure energy and a second accumulator (41),
wherein the first accumulator (40) can, for the purpose of reclaiming the pressure energy stored therein at least for a delivery direction of the hydraulic pump (3) be connected to a first or second working line (5, 6) at the suction side of said delivery direction,
**characterized in that**
the first accumulator (40) and the second accumulator (41) can be connected directly by means of an accumulator pressure relief valve (91).

2. Hydrostatic drive according to claim 1,
**characterized in that**
for recovering the pressure energy stored in the first accumulator (40), the upstream first or second working line connection (8, 9) can be connected to the delivery-side first or second working line (5, 6) in respect to the hydraulic pump (3) and the respective other working line connection (9, 8) can be connected to the second accumulator (41).

3. Hydrostatic drive according to claim 1,
**characterized in that**
for charging the first accumulator (40) the first accumulator (40) can be connected to the downstream first or second working line connection (8, 9) of the hydraulic motor (7) for at least one flow direction and the upstream second or first working line connection (9, 8) of the hydraulic motor (7) can be connected to the second accumulator (41).

4. Hydrostatic drive according to any of claims 1 to 3,
**characterized in that**
for connecting the first accumulator (40) to the first or second working line (5, 6) and/or for connecting the second accumulator (41) to the first or second working line connection (8, 9) and/or for connecting the first or second working line connection (8, 9) to the first or second working line (5, 6) a poppet valve (15, 16, 44, 45, 57, 58) is provided, respectively.

5. Hydrostatic drive according to claim 4,
**characterized in that**
the poppet valves (15, 16, 44, 45, 57, 58) can be supplied with a control pressure by a respective pilot valve (24, 24', 36, 36', 46, 47, 59, 60).

6. Hydrostatic drive according to any of claims 1 to 5,
**characterized in that**
the second accumulator (41) is connected to a pressure maintaining line (76) that can be connected to a pressure-medium source.

7. Hydrostatic drive according to claim 6,
**characterized in that**
the pressure-medium source is a feeding means (69).

8. Hydrostatic drive according to claim 7,
**characterized in that**
the feeding means (69) comprises a feed pump (70) delivering to the feed line (69).

9. Hydrostatic drive according to claim 8,
**characterized in that**
the feed line (71) can be connected to the pressure maintaining line (76) by means of a switch valve (77).

10. Hydrostatic drive according to claim 8,
**characterized in that**
the feed line (71) is connected to the pressure maintaining line (76) by means of a check valve opening towards the pressure maintaining line (76).

## Revendications

1. Mécanisme d'entraînement hydrostatique comprenant une pompe hydraulique (3) qui est apte à être reliée via une première conduite de travail (5) à un premier raccord de conduite de travail (8) et via une deuxième conduite de travail (6) à un deuxième raccord de conduite de travail (9) d'un moteur hydraulique (7) et comprenant un premier accumulateur (40) de stockage d'énergie de pression ainsi qu'un deuxième accumulateur (41),
ledit premier accumulateur (40) étant apte, pour la récupération de l'énergie de pression y stockée, au moins pour un sens de refoulement de ladite pompe hydraulique (3), à être relié à ladite première ou bien deuxième conduite de travail (5, 6) qui, dans ce sens de refoulement, est située côté aspiration,
**caractérisé par le fait que** ledit premier accumulateur (40) et ledit deuxième accumulateur (41) sont aptes à être reliés directement entre eux par le biais d'une valve de limitation de pression d'accumulateur (91).

2. Mécanisme d'entraînement hydrostatique selon la revendication 1, **caractérisé par le fait que**, pour la récupération de l'énergie de pression stockée dans ledit premier accumulateur (40), le premier ou bien deuxième raccord amont de conduite de travail (8, 9) est apte à être relié à la première ou bien deuxième conduite de travail (5, 6) située côté de refoulement par rapport à la pompe hydraulique (3), et ledit respectivement autre raccord aval de conduite de travail (9, 8) est apte à être relié au deuxième accumulateur (41).

3. Mécanisme d'entraînement hydrostatique selon la revendication 1 ou 2, **caractérisé par le fait que**, pour recharger ledit premier accumulateur (40), le premier accumulateur (40) est apte à être relié, au moins pour un sens d'écoulement, au premier ou deuxième raccord aval de conduite de travail (8, 9) du moteur hydraulique (7) et ledit deuxième ou bien premier raccord amont de conduite de travail (9, 8) du moteur hydraulique (7) est apte à être relié au deuxième accumulateur (41).

4. Mécanisme d'entraînement hydrostatique selon l'une quelconque des revendications 1 à 3, **caractérisé par le fait que** l'on prévoit respectivement une soupape à siège (15, 16, 44, 45, 57, 58) pour relier ledit premier accumulateur (40) à ladite première ou bien deuxième conduite de travail (5, 6) et/ou pour relier ledit deuxième accumulateur (41) audit premier ou bien deuxième raccord de conduite de travail (8, 9) et/ou pour relier ledit premier ou bien deuxième raccord de conduite de travail (8, 9) à ladite première ou bien deuxième conduite de travail (5, 6).

5. Mécanisme d'entraînement hydrostatique selon la revendication 4, **caractérisé par le fait que** les soupapes à siège (15, 16, 44, 45, 57, 58) peuvent être soumises par respectivement une vanne-pilote (24, 24', 36, 36', 46, 47, 59, 60) à une pression de commande.

6. Mécanisme d'entraînement hydrostatique selon l'une quelconque des revendications 1 à 5, **caractérisé par le fait que** ledit deuxième accumulateur (41) est relié à une conduite de maintien de pression (76) qui est apte à être reliée à une source de fluide sous pression.

7. Mécanisme d'entraînement hydrostatique selon la revendication 6, **caractérisé par le fait que** ladite source de fluide sous pression est un dispositif d'alimentation (69).

8. Mécanisme d'entraînement hydrostatique selon la revendication 7, **caractérisé par le fait que** ledit dispositif d'alimentation (69) comprend une pompe d'alimentation (70) refoulant dans une conduite d'alimentation (71).

9. Mécanisme d'entraînement hydrostatique selon la revendication 8, **caractérisé par le fait que** ladite conduite d'alimentation (71) est apte à être reliée via une soupape de commutation (77) à ladite conduite de maintien de pression (76).

10. Mécanisme d'entraînement hydrostatique selon la revendication 8, **caractérisé par le fait que** ladite conduite d'alimentation (71) est reliée à ladite conduite de maintien de pression (76) via un clapet anti-retour s'ouvrant en direction de la conduite de maintien de pression (76).
